# EUROPEAN PATENT APPLICATION

(11) **EP 4 458 559 A1**
(43) Date of publication of application: **06.11.2024**
(21) Application number: 24163832.9
(22) Date of filing: 15.03.2024
(51) Int. Cl.: B29C 65/08, B29D 99/00, B29L 31/00, B29L 31/30

(54) **THREE-DIMENSIONAL MESH STRUCTURES AND METHOD OF ASSEMBLY**

(30) Priority: 17.03.2023 US 202363452914 P; 26.02.2024 US 202418587726
(71) Applicant: Lear Corporation, Southfield, MI 48033 (US)
(72) Inventor: Swikoski, Lisa, Westbloomfield, MI, 48324 (US); Valenzuela, Ibrahim, Novi, MI, 48375 (US); Hudson, Curtis, Macomb, MI, 48042 (US); Repke, Eric, Milford, MI, 48380 (US); Brudzynsky, Michelle A., Farmington Hills, MI, 48331 (US)
(74) Representative: Grünecker Patent- und Rechtsanwälte PartG mbB

(57) **Abstract**

A seat cushion formed from a body comprising a plurality of extruded polymer filaments randomly connected to form a first three-dimensional mesh structure formed by the extruded polymer filaments. The body is formed by heating an area of the body with an ultrasonic tool that modifies a portion of the extruded polymer filaments to form a second three-dimensional structure comprising a second shape that is different than the first shape. A skin of extruded polymer film is welded to the body of extruded polymer filaments. A second body of a plurality of extruded polymer filaments randomly connected to form a second three-dimensional mesh structure formed by the extruded polymer filaments is welded to the first body. A method is disclosed for modifying the bodies with an ultrasonic tool to shape or weld the bodies.

## Description

### REFERENCE TO RELATED APPLICATIONS

This application claims the benefit of U.S. provisional application Serial No. 63/452,914 filed March 17, 2023, the disclosure of which is hereby incorporated in its entirety by reference herein.

### TECHNICAL FIELD

This relates to a three-dimensional mesh structure and a method of assembly.

### BRIEF DESCRIPTION OF THE DRAWINGS

FIGURE 1 is a perspective view of an example of a seat assembly comprising, in part, a three-dimensional filament mesh structure;
FIGURE 2 is schematic view of an example of a manufacturing system for making the filament mesh structure;
FIGURE 3 is a diagrammatic view of a three-dimensional mesh structure formed of randomly looped and bonded filaments with a film applied to the exterior surface of the three-dimensional mesh structure.
FIGURE 4 is a cross section view of the three-dimensional mesh structure from the circled portion in Figure 3 with a polymer film skin bonded to the randomly looped and bonded filaments.
FIGURE 5 is a diagrammatic elevation view of an ultrasonic tool and two three-dimensional mesh structures assembled together with the ultrasonic tool heating an adjoining surface of each three-dimensional mesh structure to weld them together.
FIGURE 6 is a diagrammatic perspective view of a three-dimensional mesh structure with an ultrasonic tool forming a trench in the three-dimensional mesh structure.
FIGURE 7 is a diagrammatic cross section view of an ultrasonic tool forming a trench in a three-dimensional mesh structure.
FIGURE 8A - 8D are diagrammatic cross section views of four alternative embodiments of the tool forming four different types of trenches in the three-dimensional mesh structure.
FIGURE 9 is a diagrammatic perspective view of an ultrasonic forming tool for molding the perimeter and for shallow depth enhancement of surface features.
FIGURE 10 is a diagrammatic perspective view of a three-dimensional mesh structure showing the initial shape thereof in solid lines with the shape shown in dashed lines formed by the ultrasonic forming tool shown in Figure 9.
FIGURE 11 is a diagrammatic perspective view of an alternative embodiment of an ultrasonic forming tool for molding the perimeter and for shallow depth enhancement of surface features.
FIGURE 12 is a diagrammatic perspective view of an ultrasonic forming tool disposed above two three-dimensional mesh structures.
FIGURE 13 is a diagrammatic perspective view of an ultrasonic forming tool penetrating one of the two three-dimensional mesh structures to form an opening therein.
FIGURE 14 is a diagrammatic perspective view of an ultrasonic forming tool removed after penetrating one of the two three-dimensional mesh structures to form an opening therein.

### DETAILED DESCRIPTION

Reference will now be made in detail to embodiments, examples of which are illustrated in the accompanying drawings. In the following detailed description, numerous specific details are set forth to provide a thorough understanding of the various described embodiments. However, it will be apparent to one of ordinary skill in the art that the various described embodiments is practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale. Some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

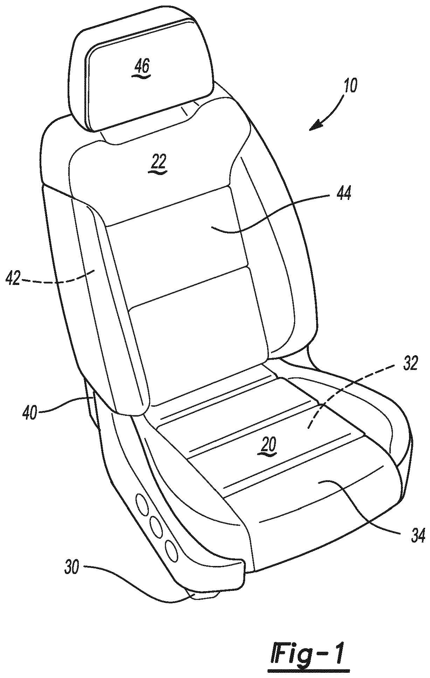

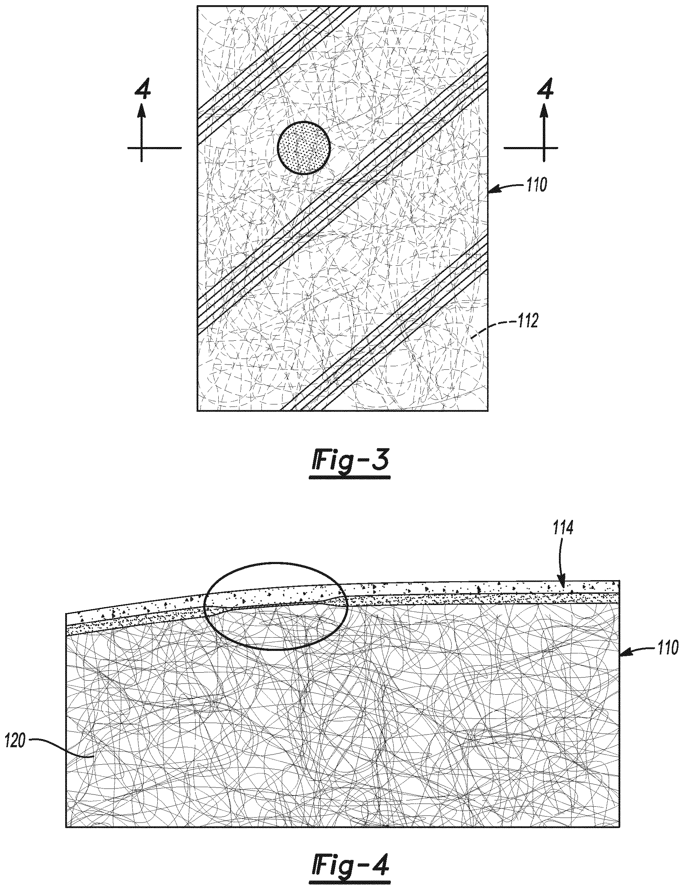

Referring to Figures 1 and 3, an example of a three-dimensional mesh structure 110 for a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats as shown, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad as will be discussed in more detail below.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second-row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad as will be discussed in more detail below.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

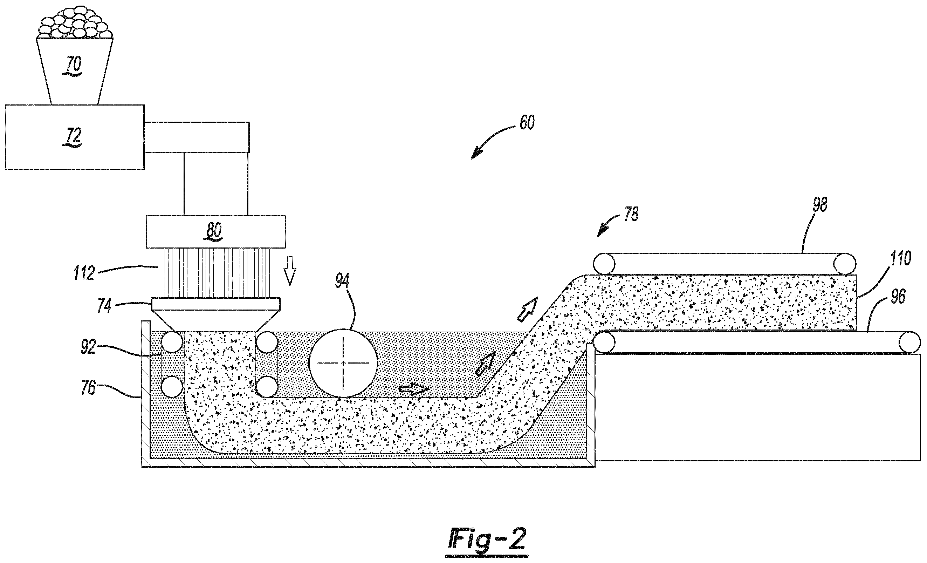

An example of a manufacturing system 60 of making a cushion or filament mesh structure is shown in Figure 2. In this example, the manufacturing system 60 includes a material supply 70, an extruder 72, and a funnel 74. The manufacturing system 60 also includes a cooling tank 76, and a material handling subsystem 78.

Referring to Figures 2 and 3, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a plurality of filaments 112. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 112 is extruded from each through hole. The filaments 112 fall downward from the die 80 under the force of gravity into the funnel 74.

The funnel 74 consolidates or groups the filaments 112 into a more compact arrangement in which the filaments bend, curl, or loop and a filament 112 contacts and bonds to at least one other filament 112. The funnel 74 has an inlet opening or funnel inlet and an outlet opening or funnel outlet that is smaller than the funnel inlet. Individual separated filaments 112 enter the funnel inlet. The filaments 112 bend, curl, or loop and move into contact as they accumulate. The filaments 112 move through the funnel 74 toward the funnel outlet. Some filaments may slide along the funnel 74 or an intervening sheet that is disposed on the funnel 74 as the filaments move toward the funnel outlet. Bonds are formed between filaments 112 at the points of contact while openings or voids between filaments 112 are present at other locations where one filament 112 does not contact or bond to another filament 112. The entangled and bonded filaments 112 pass through the funnel outlet of the funnel 74 and enter the cooling tank 76. For convenience in reference, the bonded filaments 112 are referred to as a mesh member or filament mesh structure 110.

The cooling tank 76 holds a liquid, such as water or a mixture of water and another fluid. The liquid in the cooling tank 76 helps support the entangled and bonded filaments 112 to limit further compacting or consolidation of the filaments 112 into a less open or less porous arrangement and maintains a desired porosity and density of the filament mesh structure 110. Thus, the liquid provides some buoyancy or resistance that can result in additional bending, curling, or looping of the filaments 112 adjacent to the surface of the liquid or within the funnel 74 to further build the filament mesh structure 110. The liquid also cools the filaments 112 when the filaments 112 are in the liquid. For instance, the liquid cools the filaments 112 from the outside to solidify the filaments 112 and prevent the filaments 112 from bonding at additional locations. At this point, the filaments 112 are relatively stiff and no longer in a plastic state and thus generally maintain a shape and are not moldable or reformable without being reheated.

The material handling subsystem 78 transports the filament mesh structure 110 through the cooling tank 76. The material handling subsystem 78 includes various rollers and conveyors that help move the filament mesh structure 110 through the liquid and out of the liquid. In some configurations, a tractor conveyor 92 is provided in the cooling tank 76 to help pull the filament mesh structure 110 away from the funnel 74 and to counter buoyancy of the filaments 112.

One or more other rollers, such as roller 94, keep the filament mesh structure 110 submerged in the liquid and guide the filament mesh structure 110 through the cooling tank 76. For example, the roller 94 may guide the filament mesh structure 110 toward a conveyor belt 96 and shaker table 98 that are disposed outside of the cooling tank 76. The shaker table 98 shakes the filament mesh structure 110 while it is on the conveyor belt 96 to remove liquid. Alternatively, or in addition, the filament mesh structure 110 may be squeezed to remove liquid, air may be blown toward the filament mesh structure 110 to help remove liquid from the filament mesh structure 110, or both. It is also contemplated that the filament mesh structure 110 may also be allowed to drip dry, or dry in ambient air.

The manufacturing system 60 described above is a continuous flow process in which the filament mesh structure 110 is formed as a continuous structure when filament extrusion is not interrupted. Further processing of the filament mesh structure 110 is provided after exiting the cooling tank 76 to cut the filament mesh structure 110 into individual pieces or blanks for individual cushions. Such processing is conducted by a cutting subsystem of the manufacturing system 60. The cutting system may be of any suitable type. For instance, the cutting system may employ a blade, knife, hot knife, saw, fluid jet, or the like to cut the filaments 112 of the filament mesh structure 110 into a blank. The cutting system may be used to shape or contour the blank. It is also contemplated that a blank may be further shaped or contoured with other manufacturing processes, such as molding of the entire blank or a portion thereof.

Referring to Figures 1 and 3, an example of a three-dimensional mesh structure 110 is shown. The three-dimensional mesh structure 110 may be a cushion, such as a cushion for a vehicle seat. A three-dimensional mesh structure 110 for a vehicle seat may be provided with a seat back 22, a seat bottom 20, or combinations thereof. The three-dimensional mesh structure 110 may be at least partially concealed by the trim cover 34 and may be directly or indirectly supported by a support structure of a seat assembly, such as a seat bottom frame 30, a seatback frame 40, a panel, support wires, or the like. Alternatively, the three-dimensional mesh structure 110 can be used as padding for other interior trim parts.

The three-dimensional mesh structure 110 is a three-dimensional mesh structure 110 formed of randomly looped and bonded filaments 112. In the drawing figures, filaments 112 of the three-dimensional mesh structure 110 are pictorially represented by randomly drawn lines to represent a section view of the three-dimensional mesh structure 110. The filaments 112 may be extruded filaments that are made of a thermoplastic material, such as a thermoplastic resin that is polyamide-based, polyester-based, polyimide-based, polyolefin-based, polypropylene-based, polystyrene-based, or combinations thereof. The filaments 112 may be made of linear low-density polyethylene (LLDPE) or high-density polyethylene (HDPE). As such, the three-dimensional mesh structure 110 and its filaments 112 are not made of foam, such as urethane or polyurethane foam, and the three-dimensional mesh structure 110 may partially or completely replace a conventional foam seat cushion. It is also contemplated that if a filament 112 includes reinforcement fibers, the reinforcement fibers need not be made of a thermoplastic polymer but may be organic material, inorganic material, or a thermoset polymer.

The extruded filaments 112 may be randomly looped, curled, or entangled and may be bonded together where one filament 112 contacts another, thereby resulting in a lightweight, air permeable cushion defining openings or voids between the filaments 112. A method of making an extruded filament mesh cushion is disclosed in United States patent application number 17/555,875, which is hereby incorporated by reference in its entirety.

Referring to Figures 1 and 3, an example of a three-dimensional mesh structure 110 comprising the cushion 32 is shown. The cushion 32 is generically designated with reference number 32 for convenience in reference. It is to be understood that the structure and description of the cushion 32 is applicable to the cushion 32 of the seat bottom 20, the cushion 42 of the seat back 22, or both.

The cushion 32 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. The cushion 32 is depicted as a non-foam component that does not include a foam component or foam material, such as urethane or polyurethane foam; however, it is contemplated that the cushion 32 may also include a foam component or foam material in addition to a non-foam component to provide additional cushioning or localized cushioning for a seat occupant. For example, foam material may be provided between the cushion 32 and a trim cover (e.g., trim cover 34, 44) that is disposed on the cushion 32, within the cushion 32, or combinations thereof. Reducing the amount of foam material that is provided with the cushion 32 or eliminating foam material from the cushion 32 reduces weight and may improve support and comfort of a seat occupant. In addition, eliminating foam material may facilitate recycling of the cushion 32.

The cushion 32 is described below in the context of a cushion 32 that does not include foam material. In this context, the three-dimensional mesh structure 110 is made of filaments 112 of polymeric material that are randomly looped, bent, curled, or entangled and are bonded together as will be discussed in more detail below. An example of filaments 112 is shown in Figures 3-4. A filament 112 is directed bonded to another filament 112 rather than being indirectly bonded with a resin or other intermediate material.

The filaments 112, which may also be referred to as strands or threads, are made of any suitable material or materials. In some configurations, the filaments 112 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low-density polyethylene (LLPDE). The filament material may be recyclable unlike foam material or more easily recycled than foam material. It is also contemplated that a filament 112 may comprise reinforcement fibers and that the reinforcement fibers may not be made of a thermoplastic material.

In some configurations, a filament 112 may be a monofilament that is made of a single material. In some configurations, a filament 112 is made of multiple materials. As an example, a filament 112 made of multiple materials may include a core that is made of a first thermoplastic material and a sheath that encircles the core and is made of a second thermoplastic material that differs from the first thermoplastic material. It is contemplated that the cushion 32 may include a combination of monofilaments and filaments that are made of multiple materials and are not monofilaments.

Filaments 112 that are randomly looped, bent, looped, curled, or entangled are bonded together where one filament 112 contacts another filament 112, thereby resulting in a lightweight, air permeable cushion (e.g., cushion 32 and/or 42) or mesh structure defining openings or voids between the filaments 112.

The process used to make a three-dimensional mesh structure 10 may result in a three-dimensional mesh structure 110 that has a generally uniform cross-section, such as a rectangular cross-section. Moreover, the filaments 112 of the three-dimensional mesh structure 110 may be cooled and hardened such that the filaments 112 are relatively stiff and no longer in a plastic state and thus not moldable or formable. A generally uniform cross-section may not provide a desired seat profile or other part profile. The cross section of the three-dimensional mesh structure 110 is altered from its original generally uniform cross-sectional profile to provide one or more indentations, protruding regions, curved regions, and the like.

Referring to Figures 3 and 4, the three-dimensional mesh structure 110 is shown with a layer of film 114 attached to the outer surface of the three-dimensional mesh structure 110. The film 114 and the filaments 112 in one embodiment are both formed of a thermoplastic material such as linear low-density polyethylene (LLDPE) or high-density polyethylene (HDPE). The film 114 is wrapped about the exterior surface of the three-dimensional mesh structure 110 and heat is applied to the film 114 and three-dimensional mesh structure 110 to melt the film 114 and weld the film 114 to the filaments 112.

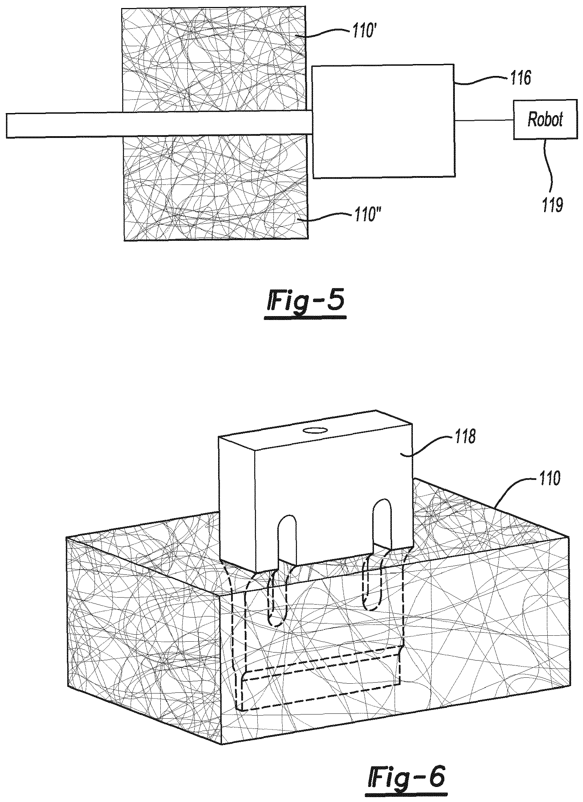

Referring to Figure 5, an ultrasonic tool 116 operated as an end effector of a robot 119. The ultrasonic tool 116 is shown to be inserted between two three-dimensional mesh structures 110' and 110." The ultrasonic tool 116 ultrasonically heats the two three-dimensional mesh structures 110' and 110" at a location where they are to be welded together. As an alternative, the tool 116 is one that comprises a resistance heating system, or a laser heating system can be used to heat the two three-dimensional mesh structures 110' and 110" and weld them together.

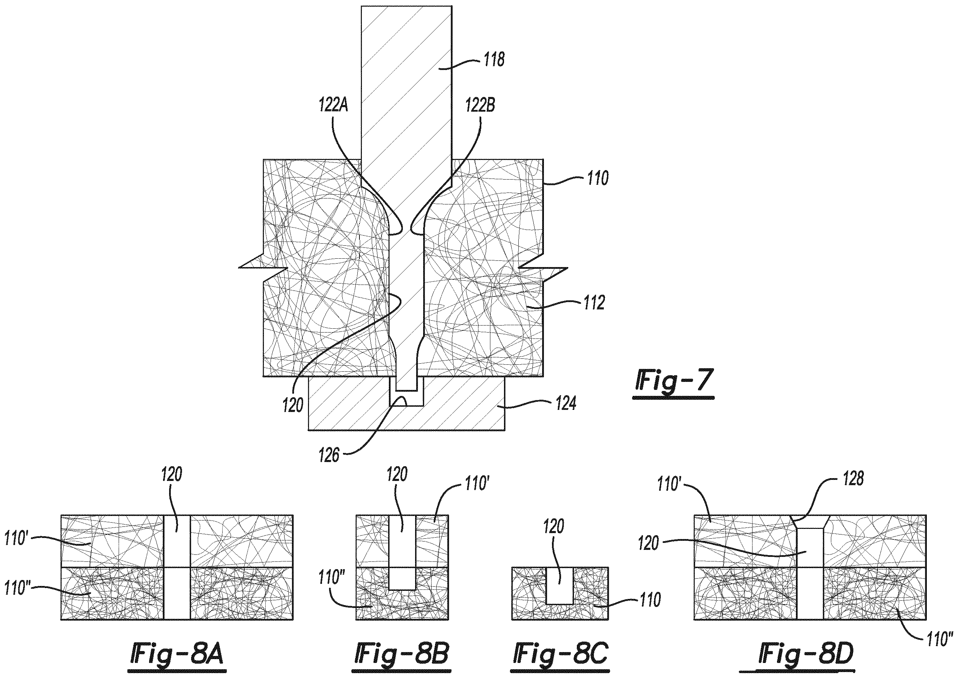

Referring to Figures 6 and 7, an internal trenching system is disclosed wherein an ultrasonic trenching tool 118 is shown to be forming a trench 120 in the three-dimensional mesh structure 110. The ultrasonic trenching tool 118 forms a trench 120 comprising two walls 122A and 122B formed by welding a portion of the extruded polymer filaments 112 together to form the first wall 122A on one side of the trenching tool 118 and by welding a second portion of the extruded polymer filaments 112 together to form the second wall 122B on another side of the trenching tool 118. Referring to Figure 7, the trenching tool 118 is shown to penetrate fully through a three-dimensional mesh structure 110 that is backed by a support member 124 that defines a relief opening 226.

Referring to Figures 8A - 8D, examples of four different applications for the use of the trenching tool 118 described above are illustrated. In Figure 8A, a slot 120 defined by the mesh structures 110' and 110" extends completely through two three-dimensional mesh structures 110' and 110." In Figure 8B, a slot 120 defined by the mesh structures 110' and 110" extends completely through a first three-dimensional mesh structure 110' and a partially through a second three-dimensional mesh structure 110". In Figure 8C, a slot 120 defined by the mesh structures 110' and 110" extends partially through a single three-dimensional mesh structure 110. In Figure 8D, a slot 120 defined by the mesh structures 110' and 110" extends completely through two three-dimensional mesh structures 110 as in Figure 8A. The trenching tool 118 (shown in Figure 7) also forms a relief area 128 at the same time as the trenching tool 118 plunge cuts the trench 120. The relief area 128 is formed by an upper portion of the trenching tool 118

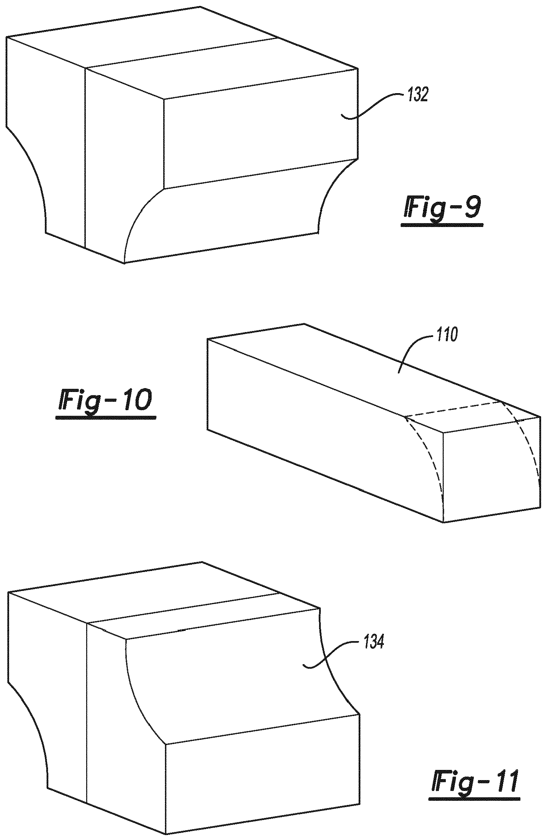

Referring to Figures 9 and 10, an ultrasonic molding tool 132 is illustrated that has a symmetrical shape that tunes and balances the ultrasonic output of the molding tool 132. The tool 132 is moved into engagement with the three-dimensional mesh structure 110 shown in Figure 10. The three-dimensional mesh structure 110 is initially provided as a rectangular block as shown in solid lines in Figure 10. The three-dimensional mesh structure 110 is formed to have a rounded perimeter as shown in dashed lines in Figure 10 after being molded by the molding tool 132. Heating the filaments 112 (shown in Figures 3 and 4) with the ultrasonic energy melts the filaments 112 to approach the melting point of the filaments 112 while pressure is applied by the molding tool 132. When the molding tool 132 is retracted, the filaments 112 are cooled to hold the shape pressed by the molding tool 132. The molding tool 132 can also be used to form surface features of a shallow depth.

Referring to Figure 11, an alternative embodiment of a molding tool 134 is illustrated that is provided as two halves that are inversely symmetrical to tune and balance the ultrasonic output of the molding tool 134. The tool 134 is used in a manner similar to the tool of Figure 9.

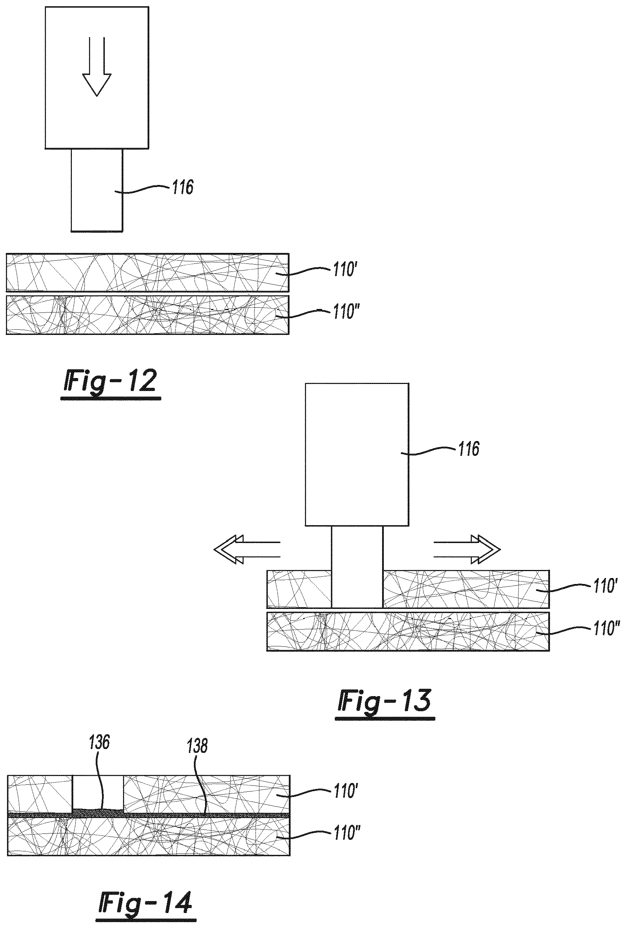

Referring to Figures 12-14, a process for forming a plate 138 or receptacle 136 in the three-dimensional mesh structures 110' and 110" is disclosed. The receptacle 136 comprises a clip, a bar, or a portion of the plate 138 that various fasteners are secured to for attaching a seat cover, trim part, or other accessories to the three-dimensional mesh structure 110. In Figure 12, the ultrasonic tool 116, such as a welding horn or a sonitrode, is disposed above two three-dimensional mesh structures 110' and 110." In Figure 13, the ultrasonic tool 116 is shown to have penetrated the top (as illustrated) three-dimensional mesh structure 110.' The reference to the "top" mesh structure 110' refers to the orientation illustrated in Figure 12 and does not limit this disclosure to any particular orientation. The ultrasonic tool 116 is then moved back and forth as shown by the arrows in Figure 13 relative to the lower three-dimensional mesh structure 110" creating ultrasonic vibrations and friction between the two mesh structures 110' and 110" to form the plate 138 as shown in Figure 14 of melted polymer between the two three-dimensional mesh structures 110' and 110."

According to one aspect of this disclosure, a method is disclosed comprising the steps of providing a body 110 comprising a plurality of extruded polymer filaments 112 randomly connected to form a three-dimensional structure in a first shape, heating portions of the extruded polymer filaments 112 with an ultrasonic tool 116, and welding at least some of the portions of the extruded polymer filaments 112 together with the ultrasonic tool 116 to form the portions of the extruded polymer filaments 112 into a second shape.

Another aspect of this method comprises the added steps of assembling a film 114 to the body 110 in the second shape, and heating at least a portion of the extruded polymer filaments 112 and the film 114 to weld the film 114 to the extruded polymer filaments 112 and form a skin on the body 110.

According to another aspect of the method, the plurality of extruded polymer filaments 112 define a plurality of spaces on the body 110 that are spanned by the film 114.

Another aspect of this method comprises the added steps of providing a second body 110" comprising a second plurality of extruded polymer filaments 112 randomly connected to form a second three-dimensional structure comprising a second exterior surface formed by the extruded polymer filaments 112, assembling the first exterior surface of the first body 110' into contact with the second exterior surface of the second body, heating a first area of the first exterior surface of the first body 110' and a second area of the second exterior surface of the second body 110", and welding the first area of the first exterior surface of the first body 110' to the second area of the second exterior surface of the second body 110" to join the first body 110' to the second body 110".

According to one aspect of this disclosure, portions of the body of extruded polymer filaments 112 are cut-off with an ultrasonic cutting tool 116 to form the body 110.

Another aspect of this method comprises the added step of inserting the ultrasonic tool 116 into at least a portion of the body 110 to form a trench 120 comprising a first wall 122A and a second wall 122B formed by welding a first portion of the extruded polymer filaments 112 together to form the first wall 122A and by welding and a second portion of the extruded polymer filaments together to form the second wall 122B.

Another aspect of this method comprises the added steps of contacting a local area of the body 110 with the ultrasonic tool 116, wherein the ultrasonic tool 116 is an ultrasonic welding tool, and welding the extruded polymer filaments 112 in the local area contacted by the ultrasonic welding tool 116 that bonds the extruded polymer filaments 112 in the local area together to form the three-dimensional structure in the first shape into a second shape that is different than the first shape.

Another aspect of this method comprises the added steps of penetrating the body 110 in a local area of an outer surface of the body 110 with the ultrasonic tool 116, wherein the ultrasonic tool 116 is an ultrasonic welding tool, and compressing the extruded polymer filaments 112 together at a location inside the body 110 with the ultrasonic welding tool 116, and welding the extruded polymer filaments 112 that are compressed by the ultrasonic welding tool 116 to bond the extruded polymer filaments 112 together in the location inside the body 110.

According to another aspect of the method, the extruded polymer filaments 112 are formed of linear low-density polyethylene or high-density polyethylene.

Another aspect of this method comprises the added steps of assembling a film 114 to the body 110, and heating at least a portion of the extruded polymer filaments 112 and the film 114, welding the film 114 to the extruded polymer filaments 112 to form a skin on the body 110, wherein the film 114 is formed of linear low-density polyethylene or high-density polyethylene.

Another aspect of this method comprises the added step of inserting the ultrasonic tool 116 into at least a portion of the body 110 to form a trench 120 comprising a first wall 122A and a second wall 122B formed by welding a first portion of the extruded polymer filaments together to form the first wall 122A and by welding and a second portion of the extruded polymer filaments together to form the second wall 122B, wherein the step of inserting the ultrasonic tool 116 into the body 110 is performed by partially or fully inserting the ultrasonic tool 116 through the body 110.

According to another aspect of the method, the ultrasonic tool 116 is manipulated with a robot 119.

According to one aspect of this disclosure, an apparatus is disclosed comprising a body 110 comprising a plurality of extruded polymer filaments 112 randomly connected to form a first three-dimensional structure comprising a first shape formed by the extruded polymer filaments 112, and forming the body 110 by heating an area of the body 110 with an ultrasonic tool 116 that modifies a portion of the extruded polymer filaments 112 to form a second three-dimensional structure comprising a second shape that is different than the first shape.

According to another aspect of the apparatus, a skin of extruded polymer film 114 is welded to the extruded polymer filaments 112 on the second three-dimensional structure comprising a second shape.

According to another aspect of the apparatus, the body 110 is a first body 110' comprising a second shape and further comprises a second body 110" comprising a plurality of extruded polymer filaments 112 randomly connected to form a second three-dimensional structure formed by the extruded polymer filaments 112, and at least one weld formed between the first body and the second body.

According to another aspect of the apparatus, the body defines at least one internal trench 120 comprising at least a first wall 122A and a second wall 122B facing each other, wherein the first wall 122A and the second wall 122B are formed by welding a first portion of the extruded polymer filaments in the first wall 122A together and by welding a second portion of the extruded polymer filaments in the second wall 122B together.

According to another aspect of the apparatus, the body 110 defines an opening 120 extending from a first exterior periphery of the body 110 to a location within the body 110, and wherein at the location within the body 110 at least some of the extruded polymer filaments 112 are welded together to form an attachment anchor 136.

According to another aspect of the apparatus, the attachment anchor 136 formed at the location inside the body 110 is selected from a group comprising a fastener receptacle, a clip, a planar member 138, or a loop.

According to another aspect of the apparatus, a skin of extruded polymer film 114 welded to the extruded polymer filaments 112 of the three-dimensional structure comprising the second shape, wherein the skin of the extruded polymer film 114 is formed of linear low-density polyethylene or high-density polyethylene.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A method, comprising:
providing a body comprising a plurality of extruded polymer filaments randomly connected to form a three-dimensional structure in a first shape;
heating portions of the extruded polymer filaments with an ultrasonic tool; and
welding at least some of the portions of the extruded polymer filaments together with the ultrasonic tool to form the portions of the extruded polymer filaments into a second shape.

2. The method of claim 1, further comprising:
assembling a film to the body in the second shape; and
heating at least a portion of the extruded polymer filaments and the film to weld the film to the extruded polymer filaments to form a skin on the body.

3. The method of claim 1 or 2 wherein the plurality of extruded polymer filaments define a plurality of spaces on the body that are spanned by the film.

4. The method of any of the preceding claims, wherein the body is a first body comprising a first exterior surface further comprising:
providing a second body comprising a second plurality of extruded polymer filaments randomly connected to form a second three-dimensional structure comprising a second exterior surface formed by the extruded polymer filaments;
assembling the first exterior surface of the first body into contact with the second exterior surface of the second body;
heating a first area of the first exterior surface of the first body and a second area of the second exterior surface of the second body; and
welding the first area of the first exterior surface of the first body to the second area of the second exterior surface of the second body to join the first body to the second body.

5. The method of any of the preceding claims, further comprising:
cutting off portions of the body of extruded polymer filaments to form the body with an ultrasonic cutting tool.

6. The method of any of the preceding claims, further comprising:
inserting the ultrasonic tool into at least a portion of the body to form a trench comprising a first wall and a second wall formed by welding a first portion of the extruded polymer filaments together to form the first wall and by welding a second portion of the extruded polymer filaments together to form the second wall, wherein preferably the step of inserting the ultrasonic tool into the body is performed by partially or fully inserting the ultrasonic tool through the body, and wherein further preferably the ultrasonic tool is manipulated with a robot.

7. The method of any of the preceding claims, further comprising:
contacting a local area of the body with the ultrasonic tool, wherein the ultrasonic tool is an ultrasonic welding tool; and
welding the extruded polymer filaments in the local area contacted by the ultrasonic welding tool that bonds the extruded polymer filaments in the local area together to form the three-dimensional structure in the first shape into a second shape that is different than the first shape.

8. The method of any of the preceding claims further comprising:
penetrating the body in a local area of an outer surface of the body with the ultrasonic tool, wherein the ultrasonic tool is an ultrasonic welding tool, and compressing the extruded polymer filaments together at a location inside the body with the ultrasonic welding tool; and
welding the extruded polymer filaments that are compressed by the ultrasonic welding tool to bond the extruded polymer filaments together in the location inside the body to form an attachment anchor at the location inside the body.

9. The method of any of the preceding claims wherein the extruded polymer filaments are formed of Linear Low-Density Polyethylene or High-Density Polyethylene.

10. The method of claim 1 further comprising:
assembling a film to the body; and
heating at least a portion of the extruded polymer filaments and the film welding the film to the extruded polymer filaments to form a skin on the body, wherein the film is formed of Linear Low-Density Polyethylene or High-Density Polyethylene.

11. An apparatus, comprising:
a body comprising a plurality of extruded polymer filaments randomly connected to form a first three-dimensional structure comprising a first shape formed by the extruded polymer filaments; and
the body being formed by heating an area of the body with an ultrasonic tool that modifies a portion of the extruded polymer filaments to form a second three-dimensional structure comprising a second shape that is different than the first shape.

12. The apparatus of claim 11, further comprising:
a skin of extruded polymer film welded to the extruded polymer filaments on the second three-dimensional structure comprising a second shape, wherein preferably the skin of the extruded polymer film is formed of linear low-density polyethylene or high-density polyethylene.

13. The apparatus of claim 11 or 12 wherein the body is a first body comprising a second shape, further comprising:
a second body comprising a plurality of extruded polymer filaments randomly connected to form a second three-dimensional structure formed by the extruded polymer filaments; and
at least one weld formed between the first body and the second body.

14. The apparatus of any of claims 11 to 13, wherein the body defines at least one internal trench comprising at least a first wall and a second wall facing each other, wherein the first wall and the second wall are formed by welding a first portion of the extruded polymer filaments in the first wall together and by welding a second portion of the extruded polymer filaments in the second wall together.

15. The apparatus of any of claims 11 to 14, wherein the body defines an opening extending from a first exterior periphery of the body to a location within the body, and wherein at the location within the body at least some of the extruded polymer filaments are welded together to form an attachment anchor, wherein preferably the attachment anchor formed at the location inside the body is selected from a group comprising:
a fastener receptacle;
a clip;
a planar member; and
a loop.
